# EUROPEAN PATENT SPECIFICATION

(11) **EP 3 113 864 B1**
(45) Date of publication and mention of the grant of the patent: **12.09.2018**
(21) Application number: 15711368.9
(22) Date of filing: 06.03.2015
(51) Int. Cl.: B01D 61/20, B01D 63/02, B01D 63/04, B01D 65/00, B01D 65/08

(54) **ENCLOSURE ASSEMBLY AND FILTRATION MODULE FOR FILTERING FLUID**
GEHÄUSEANORDNUNG UND FILTRIERMODUL ZUR FILTERUNG EINER FLÜSSIGKEIT
ENSEMBLE ENCEINTE ET MODULE DE FILTRATION POUR FILTRER UN FLUIDE

(30) Priority: 07.03.2014 US 201461949639 P
(43) Date of publication of application: 11.01.2017
(73) Proprietor: Koch Membrane Systems, Inc., Wichita, Kansas 67220 (US)
(72) Inventor: JOHNSON, Taylour L., Wilmington, Massachusetts 01887 (US); COLBY, David M., Wilmington, Massachusetts 01887 (US); SINGH, Manwinder, Wilmington, Massachusetts 01887 (US)
(74) Representative: Ter Meer Steinmeister & Partner
(86) International application number: PCT/US2015/019121
(87) International publication number: WO 2015/134844

(56) References cited:
- WO-A1-02/30550
- WO-A1-2006/017911
- WO-A1-2006/047814
- WO-A1-2013/048801
- AU-A- 1 357 983
- US-A- 4 038 190
- US-A1- 2002 179 517

## Description

### Field of the Disclosure

The present disclosure relates to enclosure assemblies and enclosure modules for filtration modules and, more particularly, to enclosure assemblies and enclosure modules for filtration modules including fiber membranes.

### Background

A wide variety of membrane filtration systems have been used for many years to treat contaminated water, such as, for example, sewage or waste water. Such systems vary in complexity and cost. In an effort to make the treatment processes more cost efficient, submerged membrane filtration processes have been developed in which modules including filtration membranes are immersed in a large feed tank, and filtrate is collected through suction applied to the filtrate side of the membranes. However, the effectiveness of these systems may be largely dependent on having effective ways to clean the surfaces of the membranes, so that they do not become clogged and/or lose their effectiveness. While some of these systems may be relatively effective, there is a continuing desire to provide a membrane filtration system for treating large volumes of fluid in, for example, submerged membrane filtration systems, that more effectively reduces system blockage or loss of effectiveness, for example, by removing materials from filtration membranes that is independent of the flow velocity of the fluid through the system.

An example of a filtration system is disclosed in U.S. Patent Application Publication No. US 2009/0026139 A1 ("the '139 publication"). The '139 publication describes a membrane filtration module of the type having a plurality of permeable, hollow membranes mounted therein, wherein, in use, a pressure differential is applied across the walls of the membranes immersed in a liquid suspension containing suspended solids. The liquid suspension is applied to one surface of the membranes to induce and sustain filtration through the membrane walls. According to the '139 publication, some of the liquid suspension passes through the walls of the membranes to be drawn off as clarified liquid or permeate, and at least some of the solids are retained on or in the membranes or otherwise as suspended solids within the liquid suspension.

Although the filtration system described in the '139 publication may be effective in removing some suspended solids from the filtered liquid, it may still suffer from a number of possible drawbacks similar to those mentioned above. For example, the solids may build up on the membranes, thereby clogging or reducing the effectiveness of the filtration system. As a result, it may be desirable to clean the solids from the membranes to restore the effectiveness of the filtration system. However, the design of the membrane filtration module of the '139 publication may render it difficult or inefficient to clean the membranes without partially or fully disassembling the membrane filtration module, which causes extended periods of unavailability and inefficiency. Moreover, the design of the system of the '139 publication may result in less efficient operation of a pump associated with the membrane filtration module. WO 2006/017911 A1 discloses another submerged system with gasification for scouring from a header.

The exemplary assemblies, systems, and methods described herein may mitigate or eliminate some of the potential drawbacks described above.

### SUMMARY

According to a first aspect, a filtration module according to claim 1 configured to filter fluid may include an enclosure assembly configured to receive a plurality of fiber membranes. The enclosure assembly may include an elongated tubular member extending along a longitudinal axis between a first end and a second end of the elongated tubular member. The elongated tubular member may include an elongated wall extending between the first and second ends of the elongated tubular member, with the elongated wall including opposing side edges. The elongated tubular member may further include a removable hatch extending between the first and second ends of the elongated tubular member and coupled to the opposing side edges of the elongated wall, thereby forming a hollow enclosure having an interior configured to provide flow communication between the first and second ends of the elongated tubular member. The filtration module may also include a header associated with the first end of the elongated tubular member and configured to provide flow communication into the interior of the elongated tubular member. The filtration module may further include a bundle of a plurality of fiber membranes coupled to the header and received in the interior of the elongated tubular member, such that the fiber membranes extend along the longitudinal axis of the elongated tubular member, with the fiber membranes being configured to filter fluid.

According to another aspect, a method according to claim 5 of reducing build-up of filtered debris on fiber membranes of a bundle of fiber membranes of a filtration module configured to filter fluid, may include providing the bundle of fiber membranes in an elongated tubular member of an enclosure assembly, such that the fiber membranes extend along a longitudinal axis of the elongated tubular member. The method may further include supplying gaseous bubbles at a first end of the elongated tubular member, such that the gaseous bubbles flow from the first end of the elongated tubular member over at least a portion of the fiber membranes toward a second end of the elongated tubular member, thereby dislodging at least some of the filtered debris.

### BRIEF DESCRIPTION OF THE DRAWINGS

Fig. 1 is a side view of an exemplary embodiment of a filtration module.
Fig. 2 is a perspective view of an exemplary embodiment of a filtration module.
Fig. 3 is a top view of an exemplary embodiment of a filtration module.
Fig. 4 is a perspective view of an exemplary embodiment of an enclosure module.
Fig. 5 is a detail view of the exemplary portion shown in Fig. 4.
Fig. 6 is a top view of an exemplary embodiment of an enclosure assembly.
Fig. 7 is a top view of an exemplary embodiment of a bundle of fiber membranes received in an exemplary embodiment of an enclosure assembly.
Fig. 8 is a side view of an exemplary embodiment of a filtration module received in an exemplary tank.
Fig. 9 is an exemplary embodiment of an enclosure assembly.
Fig. 10 is a detail view of the exemplary embodiment shown in Fig. 9.
Fig. 11 is a cross-sectional view of an exemplary embodiment of an elongated tubular member.
Fig. 12 is a partial perspective view of an exemplary embodiment of an elongated tubular member.
Fig. 13 is a top view of an exemplary embodiment of an enclosure assembly.
Fig. 14 is a detail view of the exemplary embodiment shown in Fig. 13.
Fig. 15 is a perspective view of another exemplary embodiment of a filtration module.
Fig. 16 is a perspective assembly view of portions of the exemplary embodiment shown in Fig. 15.
Fig. 17 is a detail perspective view of a portion of the exemplary embodiment shown in Fig. 16.
Fig. 18 is a detail perspective view of a portion of the exemplary filtration module shown in Fig. 15.
Fig. 19 is a detail view of an exemplary embodiment of a riser coupling assembly.
Fig. 20 is an inverted section view of a portion of an exemplary embodiment of a filtration module.
Fig. 21 is an inverted assembly view of exemplary embodiments of components related to a fiber bundle assembly.
Fig. 22 is an inverted partial perspective view of a portion of an exemplary embodiment of a fiber bundle assembly.
Fig. 23 is an inverted partial perspective section view of an exemplary embodiment of a bundle body and fiber bundle assembly.
Fig. 24 is an exemplary embodiment of a fiber plate.
Fig. 25 is an exemplary embodiment of a fiber plate.
Fig. 26 is an exemplary embodiment of a fiber plate.
Fig. 27 is an exemplary embodiment of a fiber plate.
Fig. 28 is an exemplary embodiment of a fiber plate.
Fig. 29 is an exemplary embodiment of a fiber plate.
Fig. 30 is an exemplary embodiment of a fiber plate.
Fig. 31 is an exemplary embodiment of a fiber plate.
Fig. 32 is an exemplary embodiment of a fiber plate.

### DESCRIPTION OF EXEMPLARY EMBODIMENTS

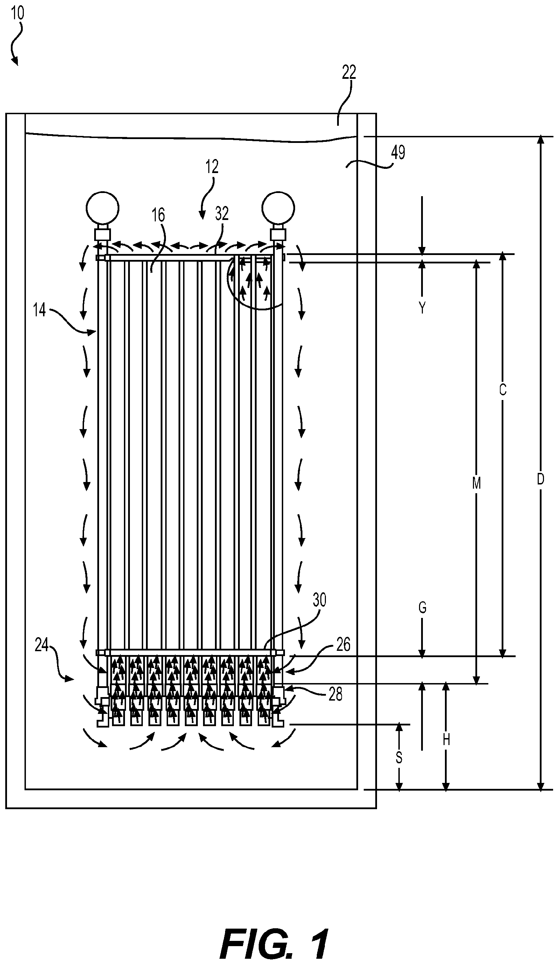

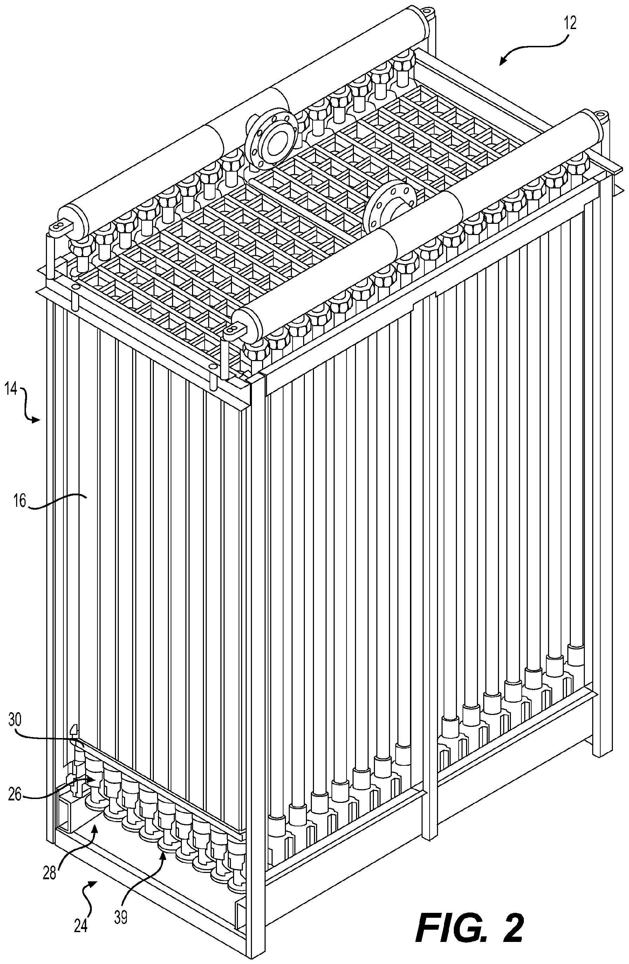

Fig. 1 shows a side view of an exemplary embodiment of a submerged membrane filtration system 10. The exemplary embodiment shown includes an exemplary embodiment of a filtration module 12, which includes a plurality exemplary enclosure modules 14, each including a plurality of exemplary enclosure assemblies 16 (see Fig. 2). In the exemplary embodiment shown, each of the enclosure assemblies 16 includes a bundle 18 of fiber membranes 20. According to some embodiments, the fiber membranes 20 are hollow fiber membranes. Other types of fiber membranes known in the art are contemplated. The exemplary filtration system 10 may be used, for example, to treat fluid that is contained or held in a basin or tank at ambient pressure.

The arrows shown in Fig. 1 schematically depict an exemplary flow path for fluid in relation to the filtration module 12. In the exemplary filtration system 10 shown, pressure less than ambient pressure is applied to the filtration module 12 and across the fiber membranes 20, thereby inducing filtration. For example, when subjected to differential pressure, some of the fluid will pass through pores of the fiber membranes 20 and be filtered, resulting in a clarified fluid (permeate), while at least some of the debris (e.g., solid material) from the previously untreated fluid will be retained on (or in) the fiber membranes 20. In the exemplary embodiment shown, air enters each of the enclosure modules 14 containing the bundles 18 of fiber membranes 20 through a single gap that extends across the filtration module 12 near the bottom of the filtration module 12. Because, for at least some embodiments, the structure of the filtration module 12 is substantially closed, once air enters the enclosure assemblies 16 of the filtration module 12, the air cannot escape the filtration module 12 until it reaches the top of the enclosure assemblies 16, for example, as shown in Fig. 1.

As shown in Fig. 1, an exemplary fluid holding tank 22 is shown as having a liquid depth D that is greater than the height C of the enclosure module 14. The distance or space between the bottom of the enclosure module 14 and the bottom of the holding tank 22 may be referred to as "the module space" S. The portion of the filtration module 12 that includes the fiber membranes 20 has a height M that is at least slightly larger than the height C of the enclosure module 14. Maximizing the height M relative to the height C of the enclosure module 14 may provide the greatest amount of active membrane material for a particular module. A portion at the bottom of the active membrane material is illustrated as a feed gap G, which can be chosen to optimize the filtration performance of a given module. The distance from the bottom of this feed gap area to the bottom of the holding tank 22 is the height H of the mixing zone of the holding tank 22.

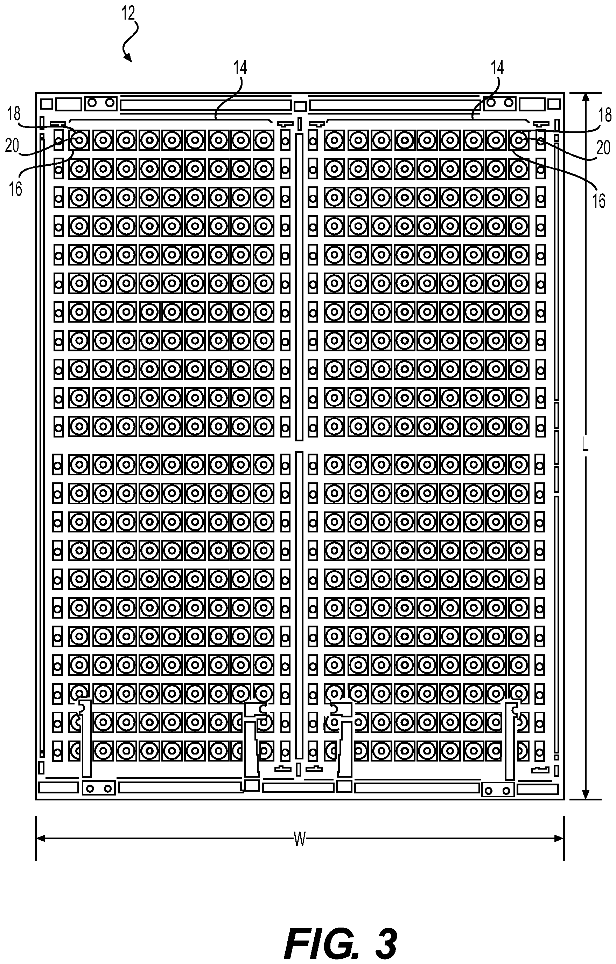

Referring to Figs. 2 and 3, exemplary filtration module 12 includes a plurality of rows of bundles 18 of fiber membranes 20, with each of the bundles 18 received in one of the enclosure assemblies 16 that are positioned adjacent to each other to form the enclosure modules 14. The exemplary filtration module 12 shown in Fig. 3 has a module length L and a module width W, wherein the number of enclosure assemblies 16 in each row and the number of rows creates the size and shape of the array of bundles 18. In the exemplary embodiment show in Fig. 3, the filtration module 12 includes two columns of 22 rows each, and each of the 44 rows includes nine bundles 18, for a total of 396 bundles 18 of fiber membranes 20 in this single exemplary filtration module 12. For example, in embodiments in which each bundle 18 contains 280 fiber membranes 20, the filtration module 12 will contain 110,880 fiber membranes 20. Other filtration module configurations are contemplated. For example, in embodiments where each of 450 bundles 18 contains 364 fiber membranes 20, the filtration module 12 will include 163,800 fiber membranes 20. The active membrane area of each module 18 may vary, for example, with changes in the number of fiber membranes 20 in a bundle 18, the length of each fiber membrane 20 from a fiber plate surface to the start of a fiber tip seal as explained more detail herein, and the number of rows installed or used. According to some embodiments, the filtration module 12 may be configured to operate with partial loading and/or may include rows added or removed, as desired.

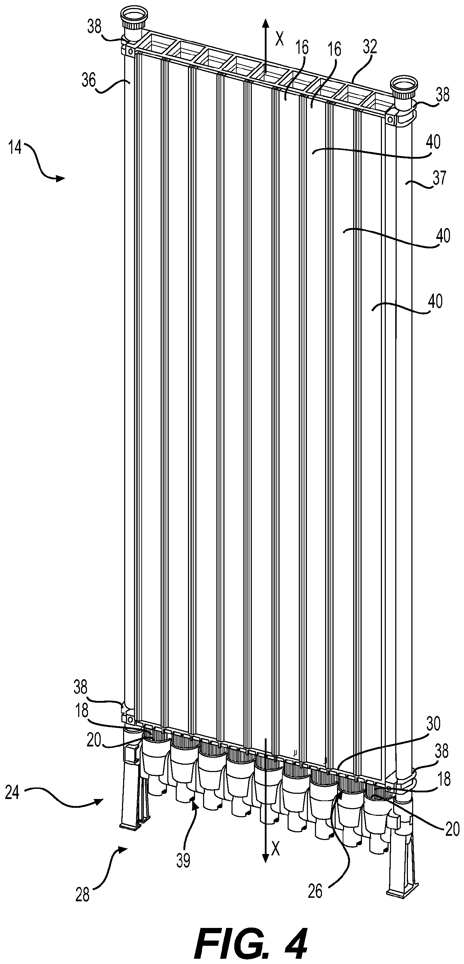

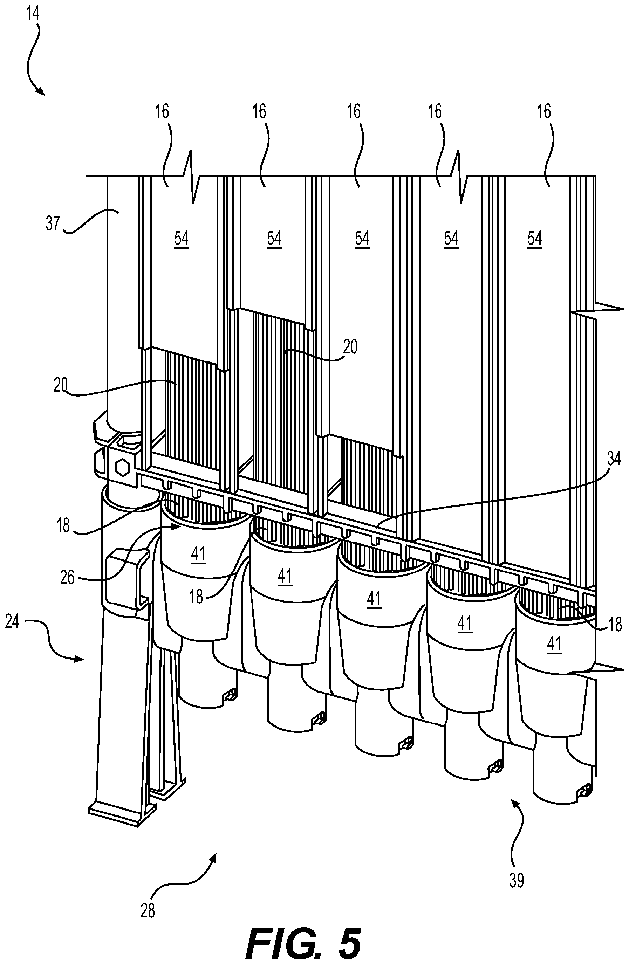

Figs. 4 and 5 show an exemplary embodiment of an enclosure module 14 including nine exemplary enclosure assemblies 16, each configured to receive a plurality of fiber membranes 20 configured to filter fluid. Other numbers of enclosure assemblies 16 per enclosure module 14 are contemplated, such as, for example, at least three. As shown, exemplary enclosure module 14 is configured to be vertically oriented during use, for example, as part of a filtration module 12 as shown in Figs. 1-5.

As shown in Figs. 4 and 5, each exemplary enclosure assembly 16 is configured to receive a plurality of fiber membranes 20. In the exemplary embodiment shown, the fiber membranes 20 are arranged in bundles 18. The bottom area 24 of the enclosure module 14 includes a feed gap area 26 between the lowest vertical section of the enclosure module 14 and a lower manifold 28 of the enclosure module 14. The feed gap area 26 may be configured to provide a desired amount of influx of debris (e.g., such as sludge) into the enclosure module 14, as this may be the only open area of the enclosure module 14 that is exposed to the incoming fluid including the debris. According to some embodiments, the length of the gap height G (see Fig. 1) may be helpful in improving or optimizing the performance of each enclosure assembly 16 of the enclosure module 14, and may be selected depending on a number of factors, including, for example, the flow rate at which filtration is desired to occur, the level of contamination of the incoming fluid including the debris, and a number of additional factors. According to some embodiments, the gap height G may range from, for example, 1 to 5 inches and may provide an area into which fluid and debris can enter the enclosure module 14 for filtration. The gap height G may be maintained with, for example, a gap spacer or other structural member that is placed below the lowest vertical section, if desired.

In the exemplary embodiment shown in Figs. 4 and 5, multiple shaped enclosure assemblies 16, sometimes referred to as "cages," are provided. Each of these exemplary enclosure assemblies 16 may be sized and shaped to contain a bundle 18 of fiber membranes 20 that extend along a longitudinal axis *X* of the enclosure assembly 16.

The exemplary embodiment shown in Figs. 4 and 5 also includes a first end cap 30 at the lower end of the enclosure module 14 and a second end cap 32 at the upper end of the enclosure module 14. The enclosure assemblies 16 can be coupled in an adjacent, side-by-side manner to the first end cap 30. For example, the lower ends of the enclosure assemblies 26 and the first end cap 30 may be configured such that lower ends of the enclosure assembly 16 slide into grooves or recesses in the first end cap 30. Once all of the adjacent enclosure assemblies 16 have been positioned with respect to the first end cap 30, the second end cap 32 may be placed over the upper ends of the enclosure assembles 16 to secure them in place, for example, as shown in Fig. 4. The exemplary enclosure module 14 also includes a permeate riser pipe 36 and an aeration riser pipe 37 at opposing ends of the enclosure module 14. As shown in Fig. 4, the riser pipes 36 and 37 may be coupled to opposite ends of the first end cap 30 and the second end cap 32, for example, via clamps 38, thereby holding the enclosure module 14 together.

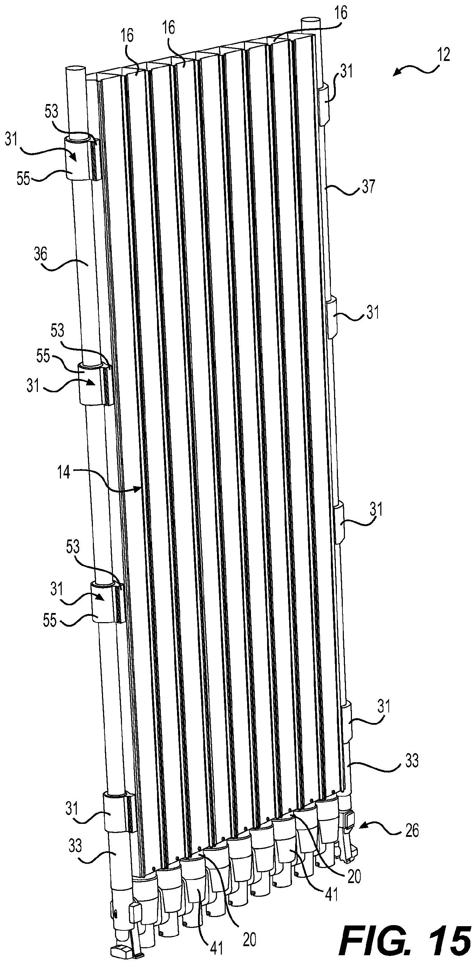

According to some embodiments, the enclosure assemblies 16 do not include one or more of the first and second ends caps 30 and 32. For example, as shown in Figs. 15-18, the enclosure assemblies 16 may be coupled together in an adjacent, side-by-side manner via a coupling mechanism, such as, for example, fasteners, adhesives, and/or welding, or any other coupling mechanisms known in the art. In some such embodiments, as explained in more detail herein, the riser pipes 36 and 37 may be coupled to directly to opposite ends of the enclosure module 14, for example, via riser coupling assemblies 31 coupled to the outermost enclosure assemblies 16, thereby holding the enclosure module 14 together.

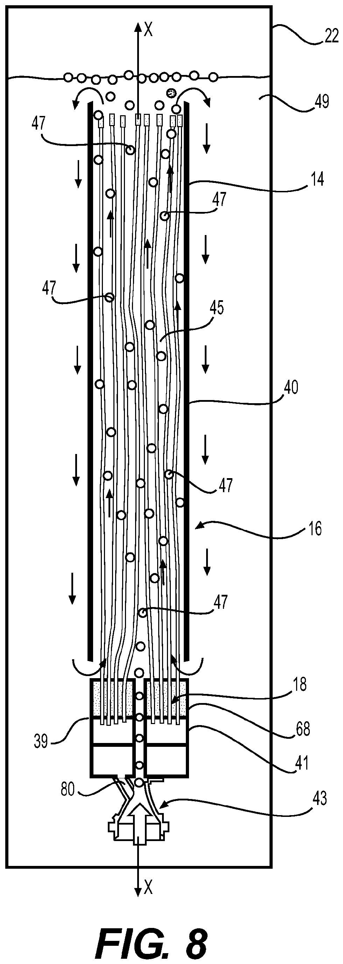

As shown in Figs. 4 and 5, exemplary enclosure module 14 also includes a header 39 coupled to one or more bundles 18 of fiber membranes 20, with the bundles 18 being coupled to one or more bundle bodies 41 of header 39. The permeate riser pipe 36 and the aeration riser pipe 37 are in flow communication with the header 39 at opposite ends thereof. As shown in Fig. 5, each bundle 18 of fiber membranes 20 extends in a generally vertical direction (i.e., along the longitudinal axis *X* of each enclosure assembly 16) away from the header 39 toward the upper end of the enclosure module 14. In the exemplary embodiment shown, one or more gasification devices 43 (see Fig. 8) are in flow communication with the header 39. Each of the gasification devices 43 may be configured to receive a gas stream supplied via the aeration riser pipe 37. Using the gas stream, each gasification device 43 may be configured to produce and release gaseous bubbles from the header 39. According to some embodiments, the filtration module 12 may be configured such that the header 39 has a single gasification device 43 corresponding to each bundle 18 and bundle body 41.

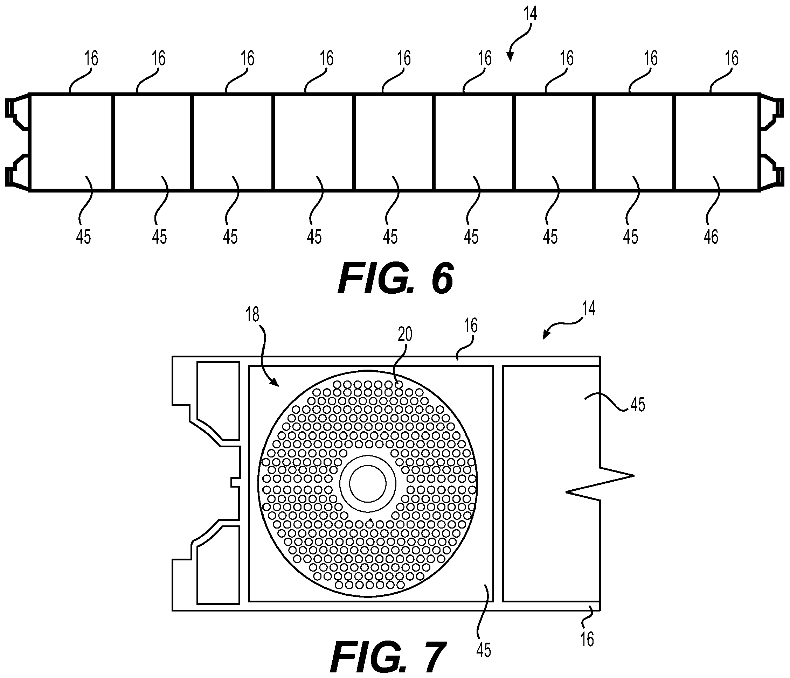

As shown in the schematic top view of Fig. 6, the enclosure modules 14 may include a plurality of enclosure assemblies 16 forming an elongated hollow enclosure 45. As shown in Fig. 7, each elongated hollow enclosure 45 may be configured to receive a bundle 18 including a plurality of the fiber membranes 20.

Fig. 8 provides a schematic depiction of an exemplary embodiment of a filtration module 12 during an exemplary filtration operation. As shown in Fig. 8, the enclosure assemblies 16 may each be configured to provide support for a bundle 18 of fiber membranes 20. In addition, the enclosure assemblies 16 may be configured to substantially surround the bundle 18 and provide confinement of gaseous bubbles 47 released from the gasification device 43 associated with the enclosure assembly 16. For example, as shown in Fig. 8, gaseous bubbles 47 released by the gasification device 43 are confined within the corresponding enclosure assembly 16 as they flow along the corresponding bundle 18 until they reach the surface of the fluid 49 in the holding tank 22. Confining the gaseous bubbles 47 within the individual enclosure assemblies 16 may provide for more efficient lifting of the fluid above the gaseous bubbles 47 and drawing of fluid up below each gaseous bubble 47. This form of aeration in conjunction with the enclosure assembly 16 may produce higher rates of fluid pumping and/or more effective self-cleaning of debris from the fiber membranes 20.

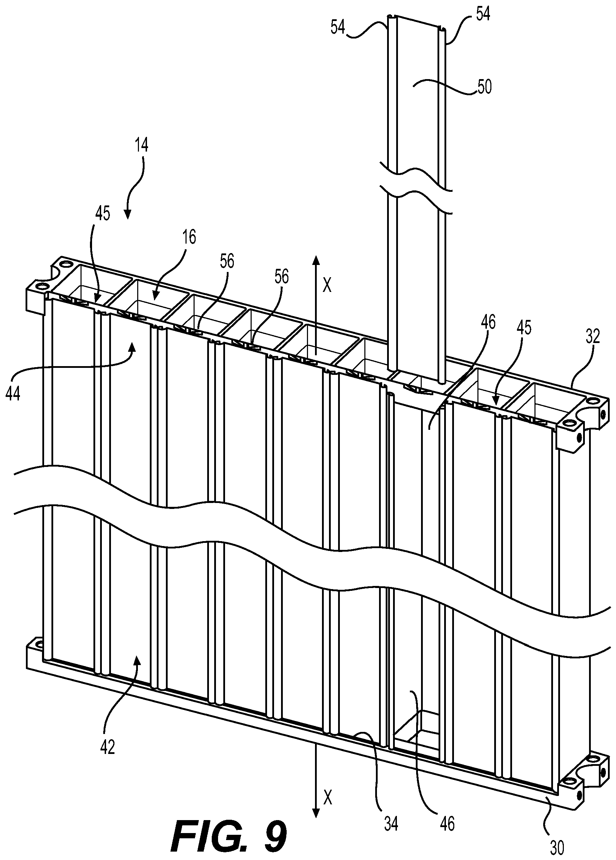

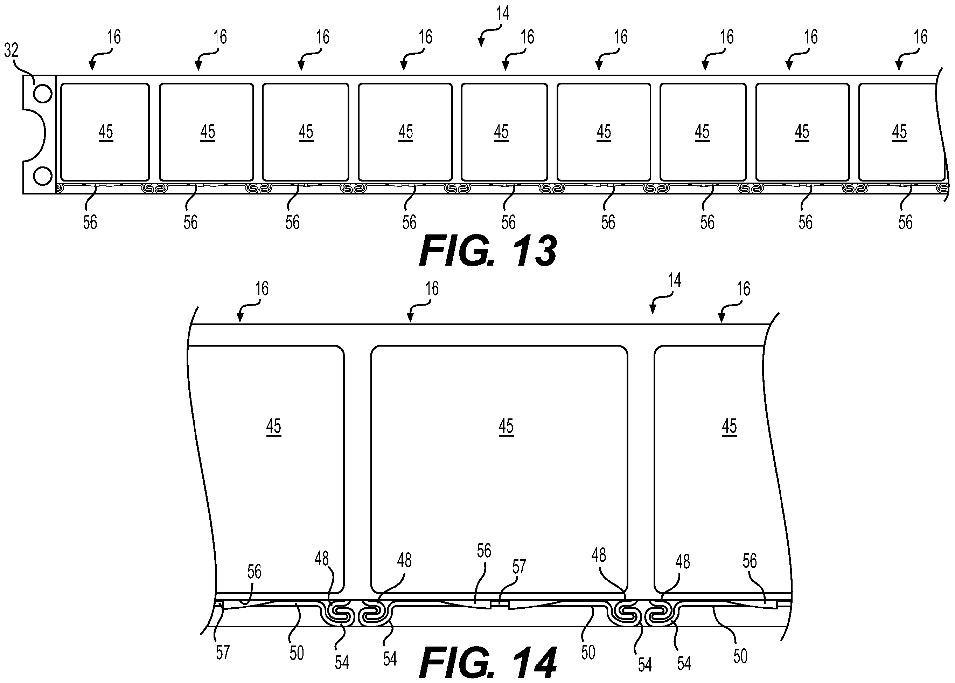

Figs. 9-14 show an exemplary embodiment of an enclosure module 14 configured to receive a plurality of fiber membranes 20 configured to filter fluid. Exemplary enclosure module 14 includes a plurality of enclosure assemblies 16 arranged in an adjacent, side-by-side configuration. In the exemplary embodiment shown, the enclosure assemblies 16 include an elongated tubular member 40 extending along a longitudinal axis *X* between a first end 42 and a second end 44 of the elongated tubular member 40. The exemplary elongated tubular member 40 includes an elongated wall 46 extending between the first and second ends 42 and 44 of the elongated tubular member 40. The elongated wall 46 includes opposing side edges 48. The exemplary enclosure assembly 16 also includes a removable hatch 50 extending between the first and second ends 42 and 44 of the elongated tubular member 40 and coupled to the opposing side edges 48 of the elongated wall 46, thereby forming a hollow enclosure 45 having an interior configured to provide flow communication between the first and second ends 42 and 44 of the elongated tubular member 40. According to some embodiments, the enclosure module 14 and respective enclosure assemblies are configured such that fluid flowing from the first end 42 of a first of the elongated tubular members 40 is prevented from flowing from the interior of the first elongated tubular member 40 into the interior of a second elongated tubular member 40 without first flowing from the second end 44 of the first elongated tubular member 40.

According to some embodiments, the enclosure module 14 may include first and second ends caps 30 and 32, for example, as shown in Figs. 9-14 For example, the exemplary embodiments shown in Figs. 9-14 include a first end cap 30 coupled to the first end 42 of the elongated tubular member 40. The first end cap 30 is configured to provide flow communication from exterior the first end 42 of the elongated tubular member 40 to the interior of the elongated tubular member 40. The exemplary enclosure module 14 shown in Figs. 9-14 also includes a second end cap 32 coupled to the second end 44 of the elongated tubular member 40. The second end cap 32 is configured to provide flow communication from the interior of the elongated tubular member 40 to exterior to the second end 44 of the elongated tubular member 40. In this exemplary manner, flow communication is provided between the first and second ends 42 and 44 of the elongated tubular member 40. As shown in Figs. 7 and 8, the interior of the elongated tubular members 40 is configured to receive a plurality of the fiber membranes 20 (e.g., a bundle 18 of fiber membranes 20) configured to filter fluid. In the exemplary embodiment shown in Figs. 9-14, the first end cap 30 and the second end cap 32 each include respective openings configured to correspond to the cross-section of the elongated tubular member 40.

As shown in Figs. 9-14, the exemplary removable hatch 50 includes opposing hatch edges 54. According to some embodiments, the opposing hatch edges 54 and the opposing side edges 48 of the elongated wall 46 are configured such that the removable hatch 50 is coupled to the elongated wall 46 and separated from the elongated wall 46 via sliding the removable hatch 50 relative to the elongated wall 46 in a direction substantially parallel to the longitudinal axis *X* of the enclosure assembly 16. For example, in the exemplary embodiment shown in Figs. 9-14, the opposing hatch edges 54 and the opposing side edges 48 of the elongated wall 46 are configured to overlap and/or interlock with one another when engaged with one another.

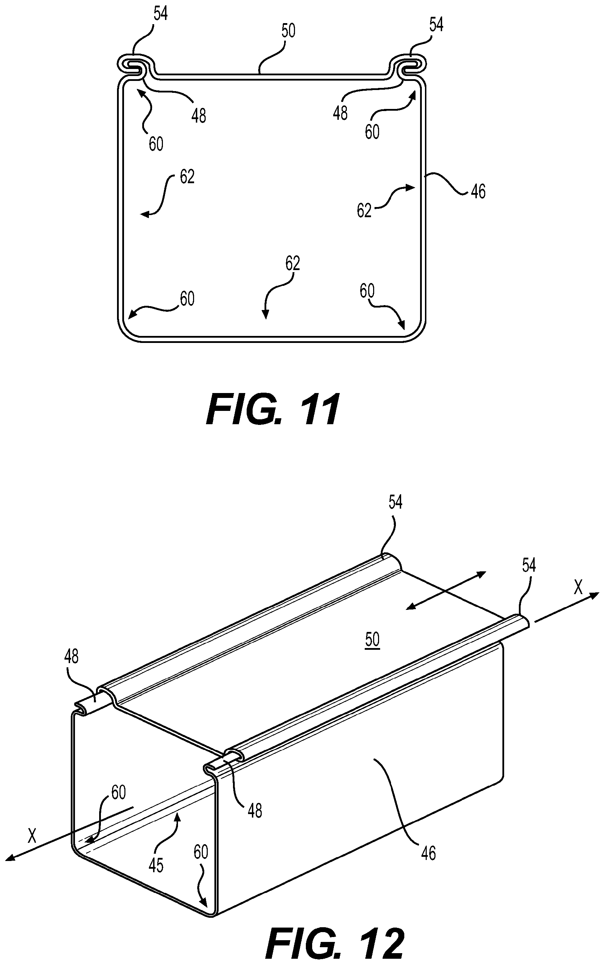

For example, as shown in Figs. 11-14, opposing side edges 48 of the exemplary elongated wall 50 each include a hook-shaped track (or other engagement configuration) that creates an elongated hook-shaped space into which the opposing hatch edges 54 can slide for interlocking engagement and coupling between the removable hatch 50 and the elongated wall 46. Other interlocking configurations of side edges 48 and hatch edges 54 are contemplated, such as, for example, a snap-lock and/or hinged lock. For example, one of the side edges 48 may be configured to be coupled to one of the hatch edges 54 via a snap-together coupling, with the other one of the side edges 48 being hingedly coupled to the other hatch edge 54. Such embodiments may be configured such that the removable hatch 50 is still slidable relative to the elongated wall 46 and/or the enclosure assembly 16. In the exemplary embodiment shown in Figs. 11-14, the interlocking engagement area is positioned outboard relative to the side edges 48 of the elongated wall 46, which may serve to minimize interference with the fiber membranes 20 during use of the filtration module 12. It is contemplated, however, that the side edges 48 and hatch edges 54 may be positioned and/or configured differently than shown.

According to some embodiments, a tab 56 may be associated with, or coupled to, an exterior surface of the second end cap 32 (e.g., on the side adjacent the removable hatch 50). The tab 56 is configured to prevent the removable hatch 50 from separating from the elongated wall 46, unless an end of the removable hatch 50 adjacent the second end cap 32 is deflected away from the exterior surface of the second end cap 32, for example, via a tool such as a screw driver, once the removable hatch 50 has been slid into place to close the enclosure assembly 16. According to some embodiments, the tabs 56 may include a slot 57 (e.g., for receiving the blade of a screwdriver or another tool) to facilitate lifting the removable hatch 50 over the tab 56. According to some embodiments, the first end cap 30 may include a hatch trap 34 configured to receive an end of the removable hatch 50 associated with the first end 42 of the elongated tubular member 40. The hatch trap 34 may take the form of a gutter-shaped flange running along the exterior side of the first end cap 30 that receives the end of the removable hatch 50. In such embodiments, the removable hatch 50 is retained on the elongated wall 46 by the opposing side edges 48 of the elongated wall 46 and between the tab 56 and the hatch trap 34.

The exemplary elongated tubular member 40 has a cross-section perpendicular to the longitudinal axis *X* (see, e.g., Fig. 11). The cross-section of the elongated tubular member 40 may be polygonal-shaped, rectangular-shaped, square-shaped (see, e.g., Fig. 11), circular-shaped, oval-shaped, or any combination thereof. According to some embodiments, such as shown in Fig. 11, the cross-section of the elongated tubular member 40 includes rounded interior surfaces 60. According to some embodiments, an interior side 62 of the elongated wall 46 is devoid of seams transverse with respect to the longitudinal axis *X* of the elongated tubular member 40. This may reduce or prevent damage to the fiber membranes 20. According to some embodiments, the elongated wall 46 has a cross-section perpendicular to the longitudinal axis *X*, and the cross-section of the elongated wall 46 is at least one of concave with respect to the interior of the elongated tubular member 40, channel-shaped, U-shaped, and C-shaped. According to some embodiments, the elongated wall 46 is formed as a single piece. According to some embodiments, the removable hatch 50 is formed as a single piece. For example, the elongated wall 46 and/or the removable hatch 50 may be formed via extrusion or roll-forming, or any other similar process. The elongated wall 46 and/or the removable hatch 50 may be formed from aluminum, polymer, carbon fiber, combinations thereof, and/or other materials having similar characteristics.

As shown in Fig. 9, exemplary enclosure module 14 includes a plurality (nine) of enclosure assemblies 16. As shown, the removable hatches 50 of the respective elongated tubular members 40 are accessible from a common side of the enclosure module 14. This may facilitate ease of servicing. According to some embodiments, each elongated tubular member 40 is independent of the other elongated tubular members 40 of a given enclosure module 14. For example, the elongated wall 46 and removable hatch 50 of a given enclosure assembly 16 may be removed from the enclosure module 14 without affecting any of the other enclosure assemblies 16 of the enclosure module 14.

The exemplary embodiment of filtration module 12 shown in Fig. 9 includes an enclosure module 14 including nine enclosure assemblies 16, such as the exemplary embodiment shown in Figs. 9-14. For example, exemplary filtration module 12 includes nine enclosure assemblies 16, each including an elongated tubular member 40 including an elongated wall 46 extending between the first and second ends 42 and 44 of the elongated tubular member 40. Each exemplary enclosure assembly 16 also includes a removable hatch 50 extending between the first and second ends 42 and 44 of the elongated tubular member 40 and coupled to the opposing side edges 48 of the elongated wall 46, thereby forming a hollow enclosure 45 having an interior configured to provide flow communication between the first and second ends 42 and 44 of the elongated tubular member 40. In the exemplary shown, the filtration module 12 also includes a first end cap 30 coupled to the first end 42 of the elongated tubular member 40, with the first end cap 30 being configured to provide flow communication from exterior the first end 30 of the elongated tubular member 40 to the interior of the elongated tubular member 40. The filtration module 12 also includes a header 39 (see, e.g., Figs. 4 and 5) associated with the first end cap 30 and configured to provide flow communication into the interior of the elongated tubular member 40. As shown in Fig. 8, for example, the exemplary filtration module 12 further includes a bundle 18 of a plurality of fiber membranes 20 configured to filter fluid coupled to the header 39 and received in the interior of the elongated tubular member 40, such that the fiber membranes 20 extend along the longitudinal axis of the elongated tubular member 40. The exemplary filtration module 12 also includes a second end cap 32 coupled to the second end 44 of the elongated tubular member 40, with the second end cap 32 being configured to provide flow communication from the interior of the elongated tubular member 40 to exterior to the second end 44 of the elongated tubular member 40.

As shown in Fig. 8, the filtration module 12 may include a gasification device 43 associated with the header 39 and configured to release gaseous bubbles 47, such that the bubbles 47 flow from the first end 42 of the elongated tubular member 40 and along the fiber membranes 20. In this exemplary manner, the fiber membranes 20 may be effectively scrubbed by action of the bubbles 47 flowing up the interior of the elongated tubular member 40 as the bubbles 47 dislodge debris that has accumulated or become trapped in the fiber membranes 20. According to some embodiments, the filtration module 12 includes a fiber plate 68 associated with each bundle 18 of fiber membranes 20 and configured to associate the plurality of fiber membranes 20 with the header 39. According to some embodiments, the filtration module 12 may include a plurality of the enclosure assemblies 16, with each of the enclosure assemblies 16 having respective first ends 42 coupled to the first end cap 30 and respective second ends 44 coupled to the second end cap 32, and a plurality of bundles 18 of the fiber membranes 20, with each of the bundles 18 of fiber membranes 20 being received in a respective enclosure assembly 16.

The exemplary multi-piece configuration of the exemplary enclosure assembly 16 may advantageously provide an easy method of inserting fiber membranes 20 and/or bundles 18 into the enclosure assembly 16, which may also result in improved access to the fiber membranes after installation. For example, an enclosure module 14 including multiple enclosure assemblies 14, each containing a bundle 18 of fiber membranes 20 may be removed from a holding tank 22 and laid horizontally on a surface (e.g., the ground), and a bundle 18 contained in the enclosure assembly 16 will move toward a side of the elongated wall 46 opposite the open side of the elongated wall 46, which will provide less chance for interference between the removable hatch 50 and the enclosed bundle 18 during removal and coupling of the removable hatch 50.

As a result, some embodiments of the filtration modules 12 may facilitate ease of servicing of the fiber membranes 20. For example, a method of servicing a filtration module 12 including a plurality of bundles 18 of fiber membranes 20 may include removing the filtration module 12 from a holding tank 22 containing fluid to be filtered. The method may further include at least partially separating the removable hatch 50 from one of the enclosure assemblies 16 to thereby expose one of the bundles 18 of fiber membranes 20, and servicing the exposed bundle 18 of fiber membranes 20. For example, according to some embodiments, the removable hatch 50 may be slid relative to the to the elongated wall 46 to expose at least a portion of the bundle 18 and fiber membranes 20 without completely separating the removable hatch 50 from the enclosure assembly 16. Alternatively, the removable hatch 50 may be completely separated from the enclosure assembly 16, for example, via sliding. Such servicing may include cleaning the fiber membranes 20, either with the fiber membranes remaining in the elongated tubular member 40, or after removal of the fiber membranes 20 from the elongated tubular member 40. In this exemplary manner, it is possible to service the fiber membranes 20 of individual enclosure assemblies 16 independently of the fiber membranes 20 of other enclosure assemblies 16. In addition, according to some embodiments, the removable hatches 50 facilitate servicing of the fiber membranes 20 without it being necessary to substantially or completely disassemble the filtration module 12 or enclosure module 14.

Some embodiments of the filtration modules 12 may serve to reduce the build-up of filtered debris on the fiber membranes 20 of a bundle 18 of fiber membranes 20. For example, a method may include providing the bundle 18 of fiber membranes 20 in an elongated tubular member 40 of an enclosure assembly 16, such that the fiber membranes 20 extend along a longitudinal axis *X* of the elongated tubular member 40. The method may further include supplying gaseous bubbles 47 at a first end 42 of the elongated tubular member 40 (see, e.g., Fig. 8), such that the gaseous bubbles 47 flow from the first end 42 of the elongated tubular member 40 over at least a portion of the fiber membranes 20 toward the second end 44 of the elongated tubular member 40, thereby dislodging at least some of the filtered debris. According to some embodiments, the filtration module 12 may include a plurality of elongated tubular members 40, with each of the elongated tubular members 40 receiving a respective bundle 18 of a plurality of fiber membranes 20, and the method for reducing build-up of debris may include supplying gaseous bubbles 47 at a first end 42 of each of the elongated tubular members 40, such that the gaseous bubbles 47 flow from the first end 42 of the respective elongated tubular member 40 over at least a portion of the respective fiber membranes 20 received in the elongated tubular member 40 toward the second end 44 of the elongated tubular member 40, thereby dislodging at least some of the filtered debris accumulated on the fiber membranes 20. In this exemplary manner, the bubbles 47 may be used in each of the enclosure assemblies 16 independently of one another to prevent the build-up of debris on the fiber membranes 20. Further, according to some embodiments, because the bubbles 47 are confined to an individual elongated tubular member 40 and respective fiber membranes 20, the bubbles 47 may be more effective at preventing the build-up of debris.

According to some embodiments, the effectiveness of operation of the filtration module 12 may substantially mitigate or prevent the need for human intervention to clean the fiber membranes 20 in some instances, such as, for example, following a catastrophic sludging event associated with the filtration module 12. The efficiency of operation of a filtration module 12 including the enclosure modules 14, according to at least some embodiments, may reduce the amount of down time required for regular servicing (e.g., cleaning, such as backflushing, chemical treatment, relaxation of the fiber membranes 20, and air scouring). According to some embodiments, the flux potential may be enhanced due to, for example, improved air lift recirculation efficiencies.

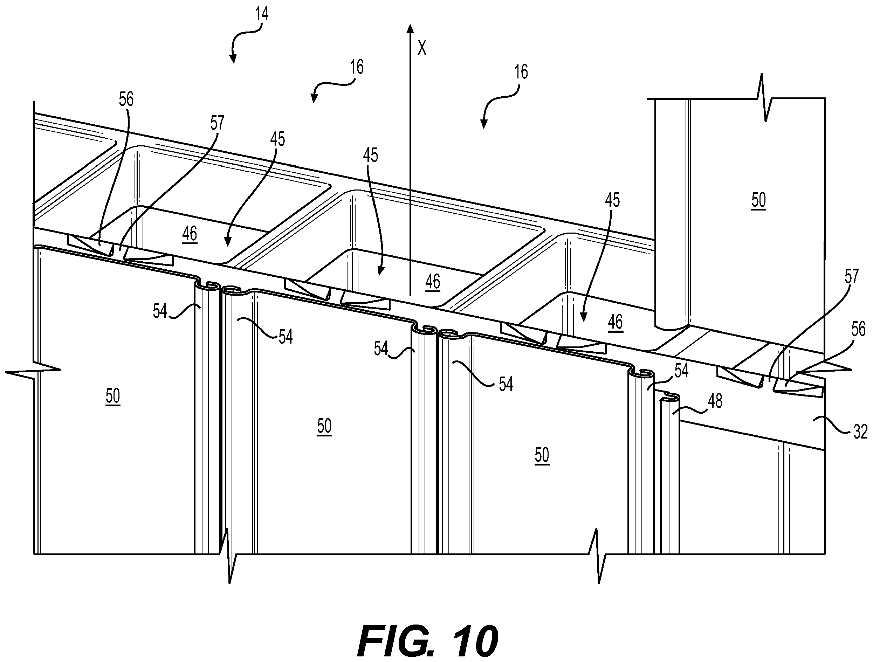

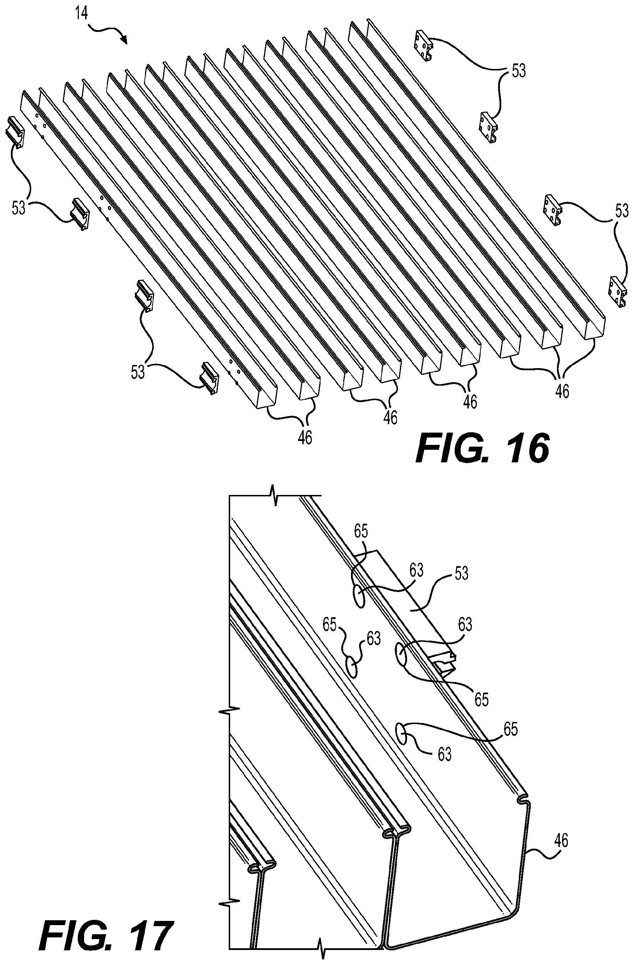

According to some embodiments, the filtration module 12, including the enclosure assemblies 16 of enclosure module 14, do not include end caps. For example, as shown in Figs. 15-19, the exemplary filtration module 12 includes an enclosure assembly 16 that does not include the end caps 30 and 32 described in relation to the exemplary embodiment shown in, for example, Figs. 9 and 10. As shown in Fig. 15, the enclosure module 14 includes a plurality of enclosure assemblies 16 in adjacent, side-by-side relation, with the permeate riser pipe 36 and the aeration riser pipe 37 located at opposite ends of the enclosure module 14. In the exemplary embodiment shown, the permeate riser pipe 36 and aeration riser pipe 37 are coupled directly to the opposite ends of the enclosure module 14 via exemplary riser coupling assemblies 31. As shown in Fig. 16, the exemplary enclosure assemblies 16 of the enclosure module 14 may be coupled directly to one another in an adjacent, side-by-side manner via a coupling mechanism, such as, for example, fasteners, adhesives, and/or welding, or any other coupling mechanisms known in the art. For example, the sides of the elongated walls 46 of the adjacent enclosure assemblies 16 may be coupled to one another as shown. According to some embodiments, the enclosure assemblies 16 may include respective elongated walls 46 and/or removable hatches 54 similar to, or substantially the same as, the elongated walls and removable hatches of enclosure assemblies designed to be coupled to end caps, for example, as shown in Figs. 11 and 12. According to some embodiments that do not include end caps, the removable hatch 54 may include holes at one or more of its longitudinal ends configured to receive a fastener (e.g., a pin-like fastener) configured to secure the longitudinal position of the removable hatch 54 with respect to the corresponding elongated wall 46. Other ways of securing the longitudinal position of the removable hatch 54 with respect to the corresponding elongated wall 46 are contemplated.

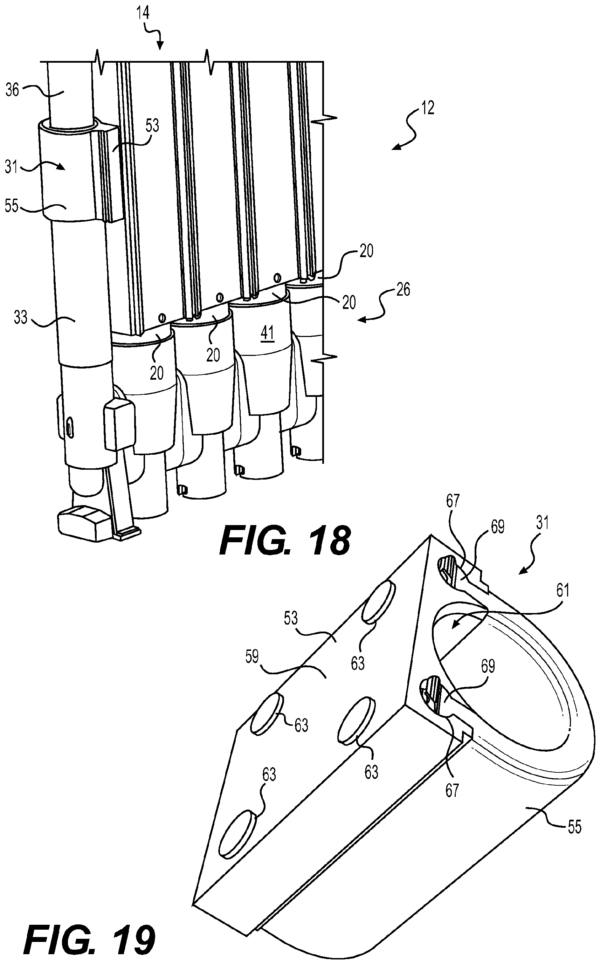

As shown in Fig. 15, the exemplary filtration module 14 may include a header 26 coupled to the enclosure module 14 via, for example, the riser pipes 36 and 37. For example, as shown in Figs. 15 and 18, the riser pipes 36 and 37 are coupled to the enclosure assemblies 16 at the opposite ends of the enclosure module 14 via a plurality of riser coupling assemblies 31. The exemplary embodiment shown also includes gap spacers 33 at each end of the enclosure module 14 configured to establish the magnitude of the feed gap G (see Fig. 1), which may be selected to adjust or optimize the filtration performance of the filtration module 12, for example, as explained previously herein. According to some embodiments, the gap spacers 33 are cylindrical tubular members having a diameter similar to, or the same as, the diameter of the riser pipes 36 and 37.

As shown in Figs. 16, 17, and 19, the exemplary riser coupling assemblies 31 include a base member 53 configured to be coupled to the elongated wall 54 of the outermost enclosure assemblies 16 of the enclosure module 14, and a sleeve member 55 configured to extend around either of the riser pipes 36 and 37. In the exemplary embodiment shown, the base member 35 includes a substantially planar engagement surface 59 configured to abut the elongated wall 54, and a semicylindrical-shaped recess 61 configured to receive an the outer surface of the riser pipe 36 or 37. The engagement surface 59 of the exemplary base member 53 also includes a plurality of locators 63 configured to fit into corresponding holes 65 in the elongated wall 54 of the enclosure assembly 16. The locators 63 may serve to more securely couple and locate the base members 53 with respect to the enclosure assembly 16. The base members 53 may be coupled to the elongated wall 54 via known coupling mechanisms, such as, for example, fasteners, adhesives, and/or welding, or any other coupling mechanisms known in the art.

Exemplary base members 53 also include a pair channels 67 on opposite sides of the recess 61 configured to receive opposing ends 69 of the sleeve member 55 for coupling the sleeve member 55 and base member 53 to one another via, for example, a longitudinal sliding action with respect to one another. In addition, according to some embodiments, the ends 69 of the sleeve member 55 may include features that prevent, or reduce the likelihood, that the sleeve member 55, once assembled with the base member 53, will unintentionally slide relative to the base member 53 as a result of, for example, vibration.

Embodiments that do not include one or more of the end caps may have possible advantages. For example, for some embodiments including an end cap associated with the header, the fiber membranes of the bundles may need to be inserted through the apertures in the end cap during assembly, which may increase time associated with assembly of the filtration module. In addition, the wall thickness associated with the end cap may reduce the cross-section for fluid flow through the filtration module. Further, the end caps may add to the difficulty of assembly of the filtration module due, for example, to the necessity of lining up the end caps with the enclosure assemblies. The end caps may also increase the cost of the filtration module.

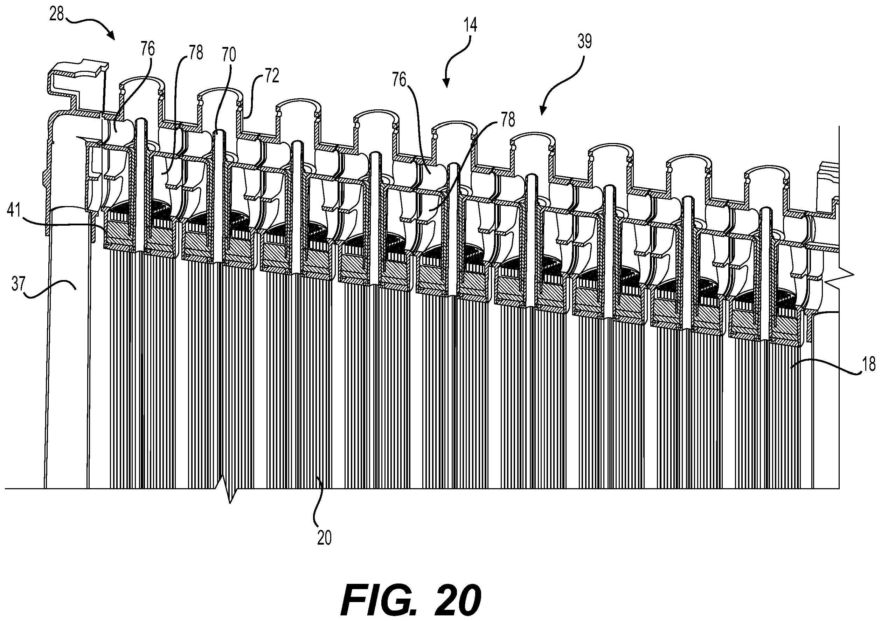

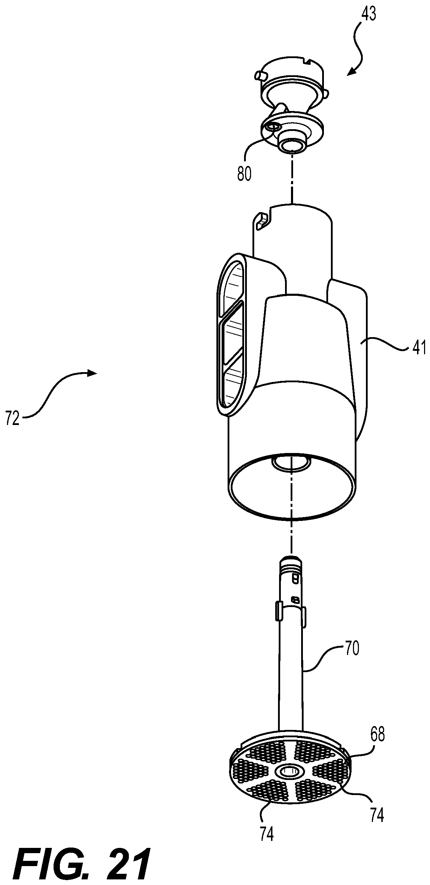

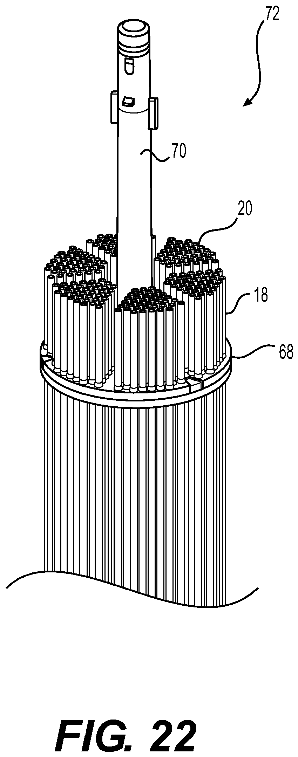

As shown in Figs. 20-23, exemplary filtration module 12 may include a plurality of the gasification devices 43, each of which may be configured for substantially continuous or intermittent aeration. For example, Fig. 21 shows an exploded view of an exemplary gasification device 43 including an individual bundle body 41, an aeration tube 70, and a fiber plate 68. The exemplary fiber plate 68, aeration tube 70, and fiber membranes 20 (see Fig. 22) may include a fiber bundle assembly 72. The exemplary header 39, for example, shown in Figs. 4 and 5, may be formed by a plurality of bundle bodies 41 positioned adjacent one another as shown. For example, the header 39, according to various embodiments, may be formed of one, two, three, four, five, six, seven, eight, nine, or more bundle bodies 41 positioned adjacent one another, for example, as shown in Figs. 4 and 5.

Fig. 22 shows the exemplary components shown in Fig. 21 in an exemplary assembled configuration and further including bundle 18 of fiber membranes 20. In Fig. 22, the components are shown inverted, such that the aeration tube 70 extends beyond the ends of the fiber membranes 20. Each of the plurality of fiber membranes 20 may extend through a corresponding hole 74 in the fiber plate 68. Fig. 20 shows a plurality of exemplary fiber bundle assemblies 72 with respective extending aeration tubes 70 that are positioned relative to their respective bundle bodies 41, which, in turn, are positioned in header 39.

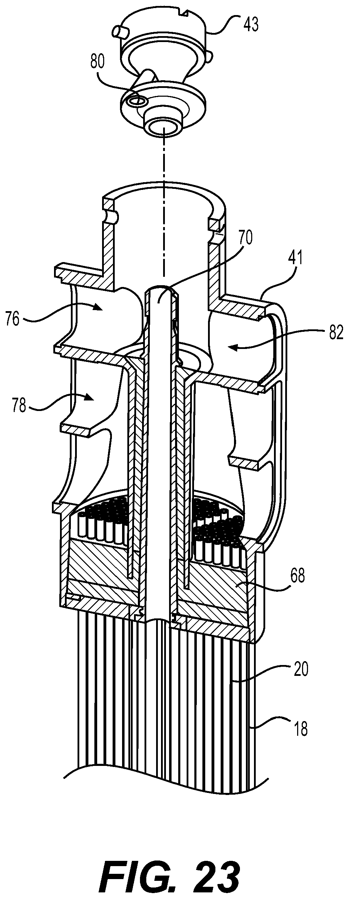

Fig. 23 is a cross-sectional perspective view that shows an exemplary bundle body 41 in an assembled configuration including an exemplary fiber bundle assembly 72. Also shown is an exemplary aeration tube 70 engaged with the bundle body 41. In the exemplary embodiment shown, the outer surface of the aeration tube 70 is provided with structure (e.g., an extending circular flange) configured to engage with an inner structure of the bundle body 41 to secure the components relative to each other. The exemplary aeration tube 70 extends through the center of bundle body 41, with one of its ends positioned within an aeration chamber 76 that may be positioned near a distal end of the aeration tube 70. As shown, the bundle body 41, may also include at least one permeate chamber 78.

Fig. 23 is shown with the exemplary gasification device 43 uncoupled, but the gasification device 43 may be rotatably coupled to the bundle body 41. When coupled to the bundle body 41, the gasification device 43 is configured to receive a gas stream from the aeration chamber 76 and direct the gas stream (see arrow 82) via an orifice 80 into the center of the gasification device 43, which is in flow communication with the aeration tube 70. As a result of this exemplary configuration, the gas stream supplied to the gasification device 43 may produce a continuous or intermittent stream of bubbles that may be released into the center of the bundle 18 via the aeration tube 70.

According to some embodiments, the aeration process may include continuously supplying a gas stream for a specific period of time to the gasification device 43 via the aeration chamber 76, and then stopping the gas stream. For example, according to some embodiments, aeration may be activated for a predetermined time (e.g., ranging from about 120 seconds to 24 hours), and thereafter stopped for a predetermined period of time (e.g., ranging from just greater than no time to about 120 seconds). Depending on the length of time the aeration is activated, the cycle may be repeated for one or more cycles throughout each 24-hour period. Other activation timing schemes are contemplated.

The fiber bundle assemblies 72 may include a fiber plate 68 having a plurality of holes 74 through each of which an individual fiber membrane 20 (e.g., a hollow fiber membrane) may extend. Figs. 19-27 show a number of exemplary embodiments of fiber plates 68 having various different hole arrangements. When assembled, the fiber plate 68 may be spaced at least slightly from the ends of the fiber membranes 20 (i.e., within the length of the fiber membrane (see Fig. 22)). In this exemplary manner, the fiber membranes 20 may be maintained in their desired locations relative to one another.

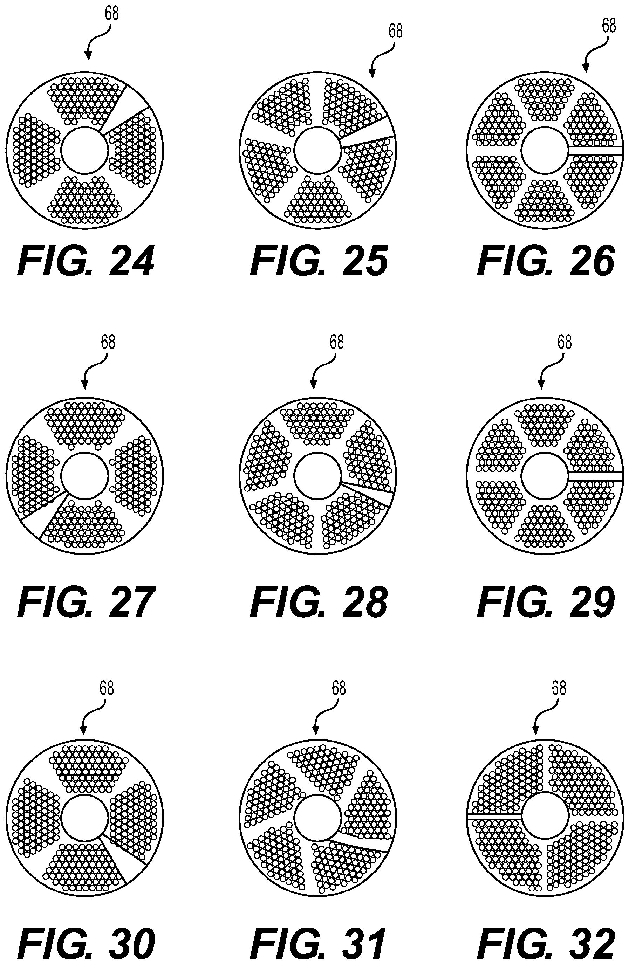

As shown in Figs. 24-32, for example, the fiber membranes 20 of a given bundle 18 may be divided into separate sections and may be generally positioned in spoke-like relationships, wherein the "spokes" represent channels through the bundle 18 that do not include any fiber membranes 20. These channels provide openings through which fluid and/or any debris may travel along the bundle 18 of fiber membranes 20. The number of fiber membranes 20 and their spacing may be arranged to reduce clogging potential and/or increase recirculation rates of the fluid in order to achieve higher sustainable permeate fluxes. The number of fiber membranes 20 within a bundle 18 and/or the configuration of the channels may be selected specific to the application in which the filtration module 12 is operating.

## Claims

1. A filtration module (12) configured to filter fluid, the filtration module comprising: an enclosure assembly (16) configured to receive a plurality of fiber membranes (20), the enclosure assembly comprising:
an elongated tubular member (40) extending along a longitudinal axis between a first end and a second end of the elongated tubular member, the elongated tubular member comprising:
an elongated wall (46) extending between the first and second ends of the elongated tubular member, the elongated wall comprising opposing side edges;
a removable hatch (50) extending between the first and second ends of the elongated tubular member and coupled to the opposing side edges of the elongated wall, thereby forming a hollow enclosure having an interior configured to provide flow communication between the first and second ends of the elongated tubular member;
a header (39) associated with the first end of the elongated tubular member and configured to provide flow communication into the interior of the elongated tubular member; and
a bundle (18) of a plurality of fiber membranes coupled to the header and received in the interior of the elongated tubular member, such that the fiber membranes extend along the longitudinal axis of the elongated tubular member, the fiber membranes being configured to filter fluid, wherein said enclosure assembly substantially surrounds said plurality of fiber membranes to provide confinement of gaseous bubbles released from a gasification device, wherein said fiber membranes are arranged in bundles, and wherein said gasification device is associated with the header and configured to release gaseous bubbles, such that the gaseous bubbles flow from the first end of the elongated tubular member and along the fiber membranes,
wherein the hatch includes opposing hatch edges wherein said hatch edges and said opposing side edges are configured such that the removable hatch is coupled to the elongated wall and separated from the elongated wall via sliding the removable hatch relative to the elongated wall in a direction substantially parallel to the longitudinal axis of the enclosure assembly.

2. The filtration module of claim 1, further comprising a fiber plate configured to associate the plurality of fiber membranes with the header.

3. The filtration module of claim 1, further comprising:
a plurality of the enclosure assemblies, each of the enclosure assemblies being coupled to an adjacent enclosure assembly via a coupling mechanism; and
a plurality of the bundles of fiber membranes, each of the bundles of fiber membranes being received in a respective enclosure assembly.

4. The filtration module of claim 1, further comprising a first riser pipe and a second riser pipe, wherein the first and second riser pipes are located at opposite ends of the filtration module.

5. A method of reducing build-up of filtered debris on fiber membranes of a bundle of fiber membranes of a filtration module of claim 1 configured to filter fluid, the method comprising:
providing the bundle of fiber membranes in an elongated tubular member of an enclosure assembly, such that the fiber membranes extend along a longitudinal axis of the elongated tubular member; and
supplying gaseous bubbles at a first end of the elongated tubular member, such that the gaseous bubbles flow from the first end of the elongated tubular member over at least a portion of the fiber membranes toward a second end of the elongated tubular member, thereby dislodging at least some of the filtered debris.

## Patentansprüche

1. Filtrationsmodul (12), das zum Filtern von Fluid konfiguriert ist, wobei das Filtrationsmodul Folgendes umfasst: eine Gehäusebaugruppe (16), die zum Aufnehmen mehrerer Fasermembranen (20) konfiguriert ist, wobei die Gehäusebaugruppe Folgendes umfasst:
ein längliches röhrenförmiges Bauteil (40), das entlang einer Längsachse zwischen einem ersten Ende und einem zweiten Ende des länglichen röhrenförmigen Bauteils verläuft, wobei das längliche röhrenförmige Bauteil Folgendes umfasst:
eine längliche Wand (46), die zwischen dem ersten und dem zweiten Ende des länglichen röhrenförmigen Bauteils verläuft, wobei die längliche Wand gegenüberliegende Seitenränder umfasst;
eine abnehmbare Klappe (50), die zwischen dem ersten und dem zweiten Ende des länglichen röhrenförmigen Bauteils verläuft und mit den gegenüberliegenden Seitenrändern der länglichen Wand gekoppelt ist, wodurch ein hohles Gehäuse mit einem Innenraum gebildet wird, konfiguriert zum Bereitstellen von Fließverbindung zwischen dem ersten und dem zweiten Ende des länglichen röhrenförmigen Bauteils;
einen Kopf (39), der mit dem ersten Ende des länglichen röhrenförmigen Bauteils verbunden ist und zum Bereitstellen von Fließverbindung in den Innenraum des länglichen röhrenförmigen Bauteils konfiguriert ist; und
eine Gruppierung (18) mehrerer Fasermembranen, die mit dem Kopf gekoppelt sind und im Innenraum des länglichen röhrenförmigen Bauteils so aufgenommen sind, dass die Fasermembranen entlang der Längsachse des länglichen röhrenförmigen Bauteils verlaufen, wobei die Fasermembranen zum Filtern von Fluid konfiguriert sind, wobei die Gehäusebaugruppe die mehreren Fasermembranen im Wesentlichen umgibt, um eine Begrenzung für Gasblasen bereitzustellen, die von einer Vergasungsvorrichtung freigesetzt werden, wobei die Fasermembranen in Gruppierungen angeordnet sind und wobei die Vergasungsvorrichtung mit dem Kopf verbunden ist und zum Freisetzen von Gasblasen konfiguriert ist, so dass die Gasblasen aus dem ersten Ende des länglichen röhrenförmigen Bauteils und entlang der Fasermembranen strömen,
wobei die Klappe gegenüberliegende Klappenränder einschließt, wobei die Klappenränder und die gegenüberliegenden Seitenränder so konfiguriert sind, dass die abnehmbare Klappe mit der länglichen Wand gekoppelt ist und von der länglichen Wand mittels Schieben der abnehmbaren Klappe relativ zu der länglichen Wand in einer Richtung im Wesentlichen parallel zur Längsachse der Gehäusebaugruppe getrennt wird.

2. Filtrationsmodul nach Anspruch 1, ferner umfassend eine Faserplatte, die so konfiguriert ist, dass sie die mehreren Fasermembranen mit dem Kopf verbindet.

3. Filtrationsmodul nach Anspruch 1, ferner umfassend:
mehrere der Gehäusebaugruppen, wobei jede der Gehäusebaugruppen mittels eines Kopplungsmechanismus mit einer benachbarten Gehäusebaugruppe gekoppelt ist; und
mehrere der Gruppierungen von Fasermembranen, wobei jede der Gruppierungen von Fasermembranen in einer jeweiligen Gehäusebaugruppe aufgenommen ist.

4. Filtrationsmodul nach Anspruch 1, ferner umfassend ein erstes Steigrohr und ein zweites Steigrohr, wobei das erste und das zweite Steigrohr an gegenüberliegenden Enden des Filtrationsmoduls angeordnet sind.

5. Verfahren zum Reduzieren der Ansammlung von Filterrückständen an Fasermembranen einer Gruppierung von Fasermembranen eines Filtrationsmoduls nach Anspruch 1, das zum Filtern von Fluid konfiguriert ist, wobei das Verfahren Folgendes umfasst:
Bereitstellen der Gruppierung von Fasermembranen in einem länglichen röhrenförmigen Bauteil einer Gehäusebaugruppe, so dass die Fasermembranen entlang einer Längsachse des länglichen röhrenförmigen Bauteils verlaufen; und
Zuführen von Gasblasen an einem ersten Ende des länglichen röhrenförmigen Bauteils, so dass die Gasblasen vom ersten Ende des länglichen röhrenförmigen Bauteils über mindestens einen Abschnitt der Fasermembranen zu einem zweiten Ende des länglichen röhrenförmigen Bauteils strömen, wobei sie mindestens einen Teil des Filterrückstands entfernen.

## Revendications

1. Module de filtration (12) configuré pour filtrer un fluide, le module de filtration comprenant : un ensemble enceinte (16) configuré pour recevoir une pluralité de membranes fibreuses (20), l'ensemble enceinte comprenant :
un élément tubulaire allongé (40) s'étendant le long d'un axe longitudinal entre une première extrémité et une deuxième extrémité de l'élément tubulaire allongé, l'élément tubulaire allongé comprenant :
une paroi allongée (46) s'étendant entre les première et deuxième extrémités de l'élément tubulaire allongé, la paroi allongée comprenant des bords latéraux opposés ;
une trappe amovible (50) s'étendant entre les première et deuxième extrémités de l'élément tubulaire allongé et couplée aux bords latéraux opposés de la paroi allongée, en formant de ce fait une enceinte creuse ayant un intérieur configuré pour fournir une communication fluidique entre les première et deuxième extrémités de l'élément tubulaire allongé ;
un collecteur (39) associé à la première extrémité de l'élément tubulaire allongé et configuré pour fournir une communication fluidique vers l'intérieur de l'élément tubulaire allongé ; et
un faisceau (18) d'une pluralité de membranes fibreuses couplées au collecteur et reçues à l'intérieur de l'élément tubulaire allongé, de telle sorte que les membranes fibreuses s'étendent le long de l'axe longitudinal de l'élément tubulaire allongé, les membranes fibreuses étant configurées pour filtrer un fluide, dans lequel ledit ensemble enceinte entoure essentiellement ladite pluralité de membranes fibreuses pour fournir un confinement de bulles gazeuses libérées d'un dispositif de gazéification, dans lequel lesdites membranes fibreuses sont agencées en faisceaux, et dans lequel ledit dispositif de gazéification est associé au collecteur et configuré pour libérer des bulles gazeuses, de telle sorte que les bulles gazeuses s'écoulent de la première extrémité de l'élément tubulaire allongé et le long des membranes fibreuses,
dans lequel la trappe inclut des bords de trappe opposés dans lequel lesdits bords de trappe et lesdits bords latéraux opposés sont configurés de telle sorte que la trappe amovible est couplée à la paroi allongée et séparée de la paroi allongée par l'intermédiaire d'un coulissement de la trappe amovible par rapport à la paroi allongée dans une direction sensiblement parallèle à l'axe longitudinal de l'ensemble enceinte.

2. Module de filtration selon la revendication 1, comprenant en outre une plaque fibreuse configurée pour associer la pluralité de membranes fibreuses au collecteur.

3. Module de filtration selon la revendication 1, comprenant en outre :
une pluralité des ensembles enceintes, chacun des ensembles enceintes étant couplé à un ensemble enceinte adjacent par l'intermédiaire d'un mécanisme de couplage ; et
une pluralité des faisceaux de membranes fibreuses, chacun des faisceaux de membranes fibreuses étant reçu dans un ensemble enceinte respectif.

4. Module de filtration selon la revendication 1, comprenant en outre un premier tuyau ascendant et un deuxième tuyau ascendant, dans lequel les premier et deuxième tuyaux ascendants se trouvent à des extrémités opposées du module de filtration.

5. Procédé de réduction de l'accumulation de débris filtrés sur des membranes fibreuses d'un faisceau de membranes fibreuses d'un module de filtration selon la revendication 1 configuré pour filtrer un fluide, le procédé comprenant :
la fourniture du faisceau de membranes fibreuses dans un élément tubulaire allongé d'un ensemble enceinte, de telle sorte que les membranes fibreuses s'étendent le long d'un axe longitudinal de l'élément tubulaire allongé ; et
l'alimentation de bulles gazeuses à une première extrémité de l'élément tubulaire allongé, de telle sorte que les bulles gazeuses s'écoulent de la première extrémité de l'élément tubulaire allongé par-dessus au moins une partie des membranes fibreuses en direction d'une deuxième extrémité de l'élément tubulaire allongé, délogeant de ce fait au moins certains des débris filtrés.
